# FASCICULE DE BREVET EUROPEEN

(11) **EP 3 410 230 B1**
(45) Date de publication et mention de la délivrance du brevet: **13.11.2019**
(21) Numéro de dépôt: 17174190.3
(22) Date de dépôt: 02.06.2017
(51) Int. Cl.: G04B 17/04, F16C 11/12, G04B 17/06

(54) **PROCÉDÉ DE FABRICATION D'UN COMPOSANT MÉCANIQUE À PIVOT FLEXIBLE À LAMES CROISÉES SÉPARÉES**
HERSTELLUNGSVERFAHREN EINES MECHANISCHEN BAUTEILS MIT BEWEGLICHEM ZAPFEN UND GETRENNTEN, SICH KREUZENDEN BLÄTTERN
METHOD FOR MANUFACTURING A MECHANICAL COMPONENT WITH FLEXIBLE PIVOT HAVING SEPARATE CROSSED BLADES

(43) Date de publication de la demande: 05.12.2018
(73) Titulaire: Patek Philippe SA Genève, 1204 Genève (CH)
(72) Inventeur: CHABLOZ, David, 74700 Sallanches (FR)
(74) Mandataire: Micheli & Cie SA

(56) Documents cités:
- WO-A1-2017/055983
- US-A- 2 931 092
- US-A1- 2013 308 997

## Description

La présente invention concerne un procédé de fabrication d'un composant mécanique, en particulier horloger, à pivot flexible à lames croisées séparées.

Les composants mécaniques à pivot flexible sont des composants comprenant une partie de fixation, une partie mobile et un pivot flexible qui relie élastiquement la partie mobile à la partie de fixation et qui guide la partie mobile en rotation autour d'un axe virtuel. Les pivots flexibles permettent de supprimer les frottements et les jeux de pivotement que connaissent les composants rotatifs classiques montés autour d'un axe physique dont les deux pivots tournent dans des paliers.

Parmi les différents types de pivot flexible, les pivots à lames croisées séparées sont intéressants pour leur faible raideur qui permet leur utilisation, par exemple, dans des parties d'un mouvement horloger où l'énergie disponible est réduite. Ce sont également les pivots flexibles qui possèdent la course angulaire la plus élevée. Un pivot flexible à lames croisées séparées comprend des lames s'étendant dans des plans parallèles différents et se croisant en vue de dessus. Des exemples de composants mécaniques à pivot flexible à lames croisées séparées sont décrits dans les documents EP 2911012, WO 2016/096677, WO 2017/055983, EP 2998800, EP 0840023 et US 6479782.

Les composants mécaniques à pivot flexible à lames croisées séparées sont difficiles à fabriquer de manière monobloc par usinage. C'est la raison pour laquelle ils sont généralement réalisés par un assemblage de pièces superposées, comme décrit dans les documents EP 2998800, EP 0840023 et US 6479782, ou sous forme monobloc mais par des techniques comme la gravure ionique réactive profonde (DRIE) qui requièrent un haut degré de spécialisation et qui sont coûteuses et applicables seulement à un petit nombre de matériaux tels que le silicium. US 2 931 092 propose de réaliser un pivot flexible à lames croisées.

La présente invention vise à proposer un procédé permettant de fabriquer un composant mécanique monobloc à pivot flexible à lames croisées séparées de façon relativement simple et dans tout matériau, en particulier métallique, se prêtant à l'usinage.

A cette fin il est prévu un procédé de fabrication d'un composant mécanique à pivot flexible à lames croisées séparées, caractérisé en ce qu'il comprend les étapes suivantes :
a) se munir d'un bloc de matière,
b) usiner le bloc de matière pour former une ouverture traversante dans une direction prédéterminée et des première et deuxième lames s'étendant dans l'ouverture traversante dans deux plans différents sensiblement perpendiculaires à la direction prédéterminée, les première et deuxième lames se croisant en vue plane de dessus et étant, dans leur zone de croisement, reliées par de la matière dudit bloc de matière,
c) éliminer la matière reliant les lames au moyen d'une fraise comprenant un axe portant un disque dont la surface périphérique est une surface de coupe, ledit axe étant orienté sensiblement parallèlement à la direction prédéterminée.

La difficulté principale que l'on rencontre lorsque l'on souhaite réaliser par usinage de manière monobloc un composant mécanique à pivot flexible à lames croisées séparées est de parvenir à séparer les lames. L'étape c) du procédé selon l'invention réalise cette séparation sans nécessiter de créer des ouvertures supplémentaires dans le bloc de matière ni d'imposer une forme particulière au composant pour rendre accessible à un outil de coupe la matière reliant les lames.

D'autres caractéristiques et avantages de la présente invention apparaîtront à la lecture de la description détaillée suivante faite en référence aux dessins annexés dans lesquels :
- les figures 1 à 4 représentent des étapes successives d'un procédé selon un mode de réalisation particulier de l'invention ;
- la figure 5 représente schématiquement une fraise utilisée dans l'une des étapes du procédé selon l'invention.

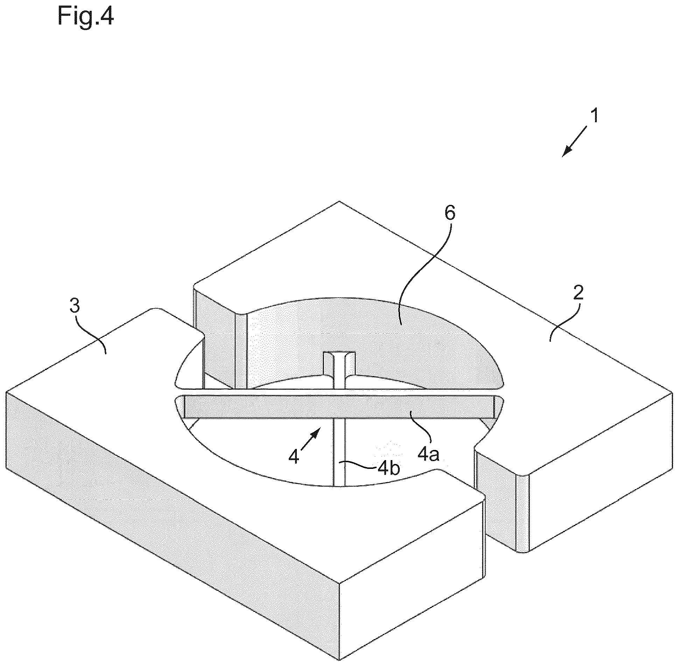

Le procédé selon l'invention permet la fabrication d'un composant mécanique monobloc 1 tel que représenté schématiquement à la figure 4, c'est-à-dire comprenant deux parties 2, 3 mobiles l'une par rapport à l'autre reliées par un pivot flexible 4. L'une de ces parties 2, 3 est destinée à reste fixe dans un mécanisme, l'autre étant destinée à être mobile. Le pivot flexible 4 comprend des lames élastiques 4a, 4b s'étendant dans des plans parallèles différents pour se croiser sans contact. Le croisement des lames 4a, 4b définit un axe de rotation virtuel pour les parties 2, 3 l'une par rapport à l'autre. Dans l'exemple représenté les lames 4a, 4b sont au nombre de deux, mais elles peuvent être en plus grand nombre pour augmenter la raideur du pivot flexible 4 dans la direction de l'axe de rotation virtuel. Dans des applications horlogères, le composant 1 est par exemple un oscillateur, une bascule, un levier (par exemple un cliquet) ou une ancre d'échappement, en particulier pour montre-bracelet, et peut prendre notamment l'une des formes décrites dans les demandes de brevet EP 2911012, WO 2016/096677 et WO 2017/055983. Typiquement, celle des deux parties 2, 3 qui est destinée à être mobile entoure l'autre des deux parties 2, 3, destinée à rester fixe.

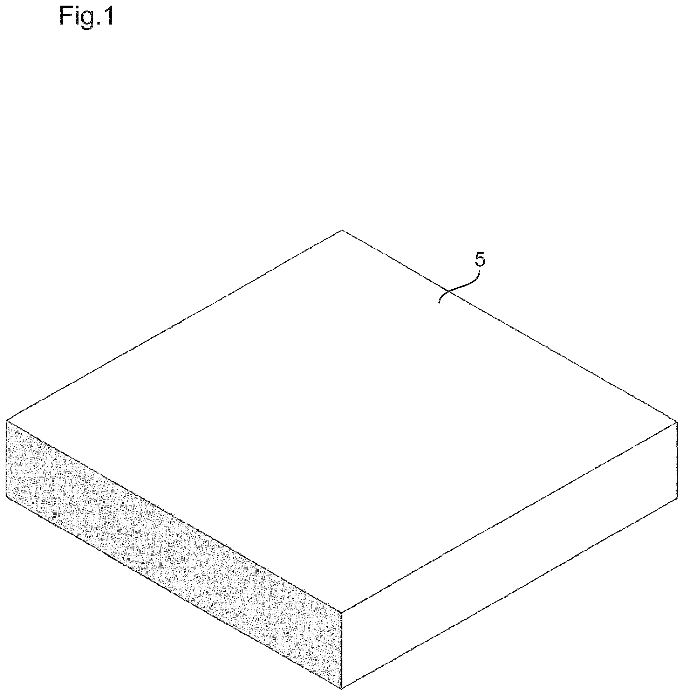

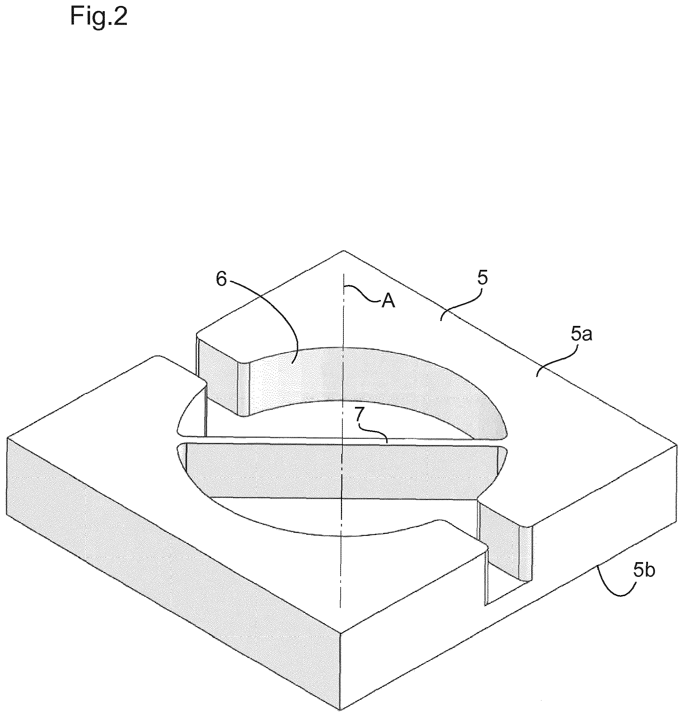

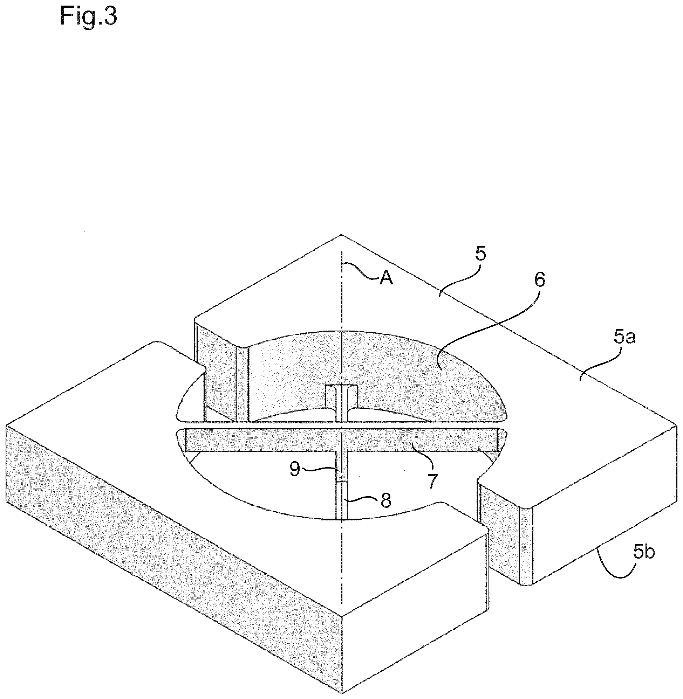

Le composant 1 est fabriqué à partir d'un bloc de matière 5 tel que représenté à la figure 1. Ladite matière est typiquement une matière métallique (métal ou alliage), par exemple l'acier, le cuivre-béryllium, le laiton, le verre métallique ou le maillechort. Dans une première étape (figure 2), le bloc de matière 5 est usiné depuis une première 5a de ses faces pour former une ouverture borgne 6 d'axe A et une première lame 7 s'étendant dans l'ouverture borgne 6, l'axe A correspondant de préférence à l'axe de rotation virtuel précité du composant 1 à réaliser. Dans une deuxième étape (figure 3), le bloc de matière 5 est usiné depuis une seconde 5b de ses faces, opposée à la première, pour rendre l'ouverture 6 traversante et pour former une deuxième lame 8 croisant la première lame 7 en vue plane de dessus. Les première et deuxième lames 7, 8 s'étendent dans des plans différents perpendiculaires à l'axe A et correspondent respectivement aux lames 4a, 4b du composant 1. Au cours de cette deuxième étape, la hauteur de la première lame 7 (dimension le long de l'axe A) est réduite mais l'usinage réalisé ne permet pas de séparer les lames 7, 8, un pont de matière 9 étant laissé qui les relie.

Ces première et deuxième étapes sont typiquement mises en œuvre au moyen d'une fraise cylindrique. En variante, au moins l'une d'entre elles pourrait être réalisée par électroérosion.

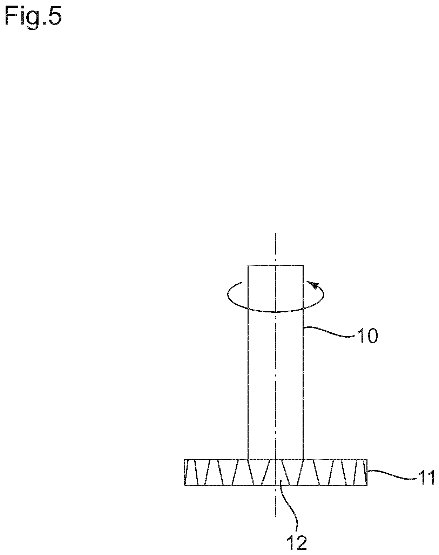

Une troisième étape du procédé selon l'invention consiste à éliminer le pont de matière 9 (figure 4). Pour ce faire, une fraise en T est utilisée, du type de celles servant généralement à rainurer des pièces. Comme illustré à la figure 5, la fraise en T comprend un axe rotatif 10 portant un disque 11 dont la surface périphérique constitue une surface de coupe 12. La hauteur du disque 11 est inférieure, typiquement très légèrement inférieure, à celle du pont de matière 9 à enlever. La fraise 10, 11 est entrée dans l'ouverture 6 de sorte que son axe 10 soit parallèle à l'axe A et le pont de matière 9 est éliminé par un ou des mouvements de translation de la fraise 10, 11 perpendiculaires à la direction de l'axe A.

Dans une variante, au lieu d'être réduite pendant la deuxième étape la hauteur de la première lame 7 peut être réduite pendant la troisième étape par la fraise en T.

Le composant mécanique monobloc 1 obtenu à la figure 4 peut subir divers traitements et peut notamment être revêtu d'une ou plusieurs couches pour améliorer certaines de ses propriétés.

## Revendications

1. Procédé de fabrication d'un composant mécanique (1) à pivot flexible à lames croisées séparées (4a, 4b), **caractérisé en ce qu'**il comprend les étapes suivantes :
a) se munir d'un bloc de matière (5),
b) usiner le bloc de matière (5) pour former une ouverture traversante (6) dans une direction prédéterminée (A) et des première et deuxième lames (7, 8) s'étendant dans l'ouverture traversante (6) dans deux plans différents sensiblement perpendiculaires à la direction prédéterminée (A), les première et deuxième lames (7, 8) se croisant en vue plane de dessus et étant, dans leur zone de croisement, reliées par de la matière (9) dudit bloc de matière (5),
c) éliminer la matière (9) reliant les lames (7, 8) au moyen d'une fraise comprenant un axe (10) portant un disque (11) dont la surface périphérique (12) est une surface de coupe, ledit axe (10) étant orienté sensiblement parallèlement à la direction prédéterminée (A).

2. Procédé selon la revendication 1, **caractérisé en ce que** l'étape b) comprend les étapes suivantes :
- usiner une première face (5a) du bloc de matière (5) pour former une première partie de l'ouverture traversante (6) et la première lame (7),
- puis usiner une deuxième face (5b) du bloc de matière (5), opposée à la première face (5a), pour former la partie restante de l'ouverture traversante (6) et la deuxième lame (8).

3. Procédé selon la revendication 1 ou 2, **caractérisé en ce que** l'étape b) est réalisée, en partie au moins, par fraisage.

4. Procédé selon l'une quelconque des revendications 1 à 3, **caractérisé en ce que** l'étape b) est réalisée, en partie au moins, au moyen d'une fraise cylindrique.

5. Procédé selon l'une quelconque des revendications 1 à 4, **caractérisé en ce que** l'étape b) est réalisée, en partie au moins, par électroérosion.

6. Procédé selon l'une quelconque des revendications 1 à 5, **caractérisé en ce que** ladite matière est une matière métallique.

7. Procédé selon l'une quelconque des revendications 1 à 6, **caractérisé en ce que** ladite matière est de l'acier, du cuivre-béryllium, du laiton, du verre métallique ou du maillechort.

8. Application du procédé selon l'une quelconque des revendications 1 à 7 à la fabrication d'un composant horloger (1).

9. Application du procédé selon l'une quelconque des revendications 1 à 7 à la fabrication d'un composant horloger (1) de l'un des types suivants: oscillateur, bascule, levier, ancre.

## Patentansprüche

1. Verfahren zur Herstellung eines mechanischen Bauteils (1) mit biegsamem Zapfen mit getrennten, sich kreuzenden Blättern (4a, 4b), **dadurch gekennzeichnet, dass** es die folgenden Schritte umfasst:
a) Nehmen eines Materialblocks (5),
b) Bearbeiten des Materialblocks (5) zum Bilden einer Durchgangsöffnung (6) in einer vorbestimmten Richtung (A) und eines ersten und zweiten Blattes (7, 8), die sich in der Durchgangsöffnung (6) in zwei unterschiedlichen Ebenen im Wesentlichen senkrecht zu der vorbestimmten Richtung (A) erstrecken, wobei das erste und das zweite Blatt (7, 8) sich in der Draufsicht von oben kreuzen und in ihrer Kreuzungszone durch Material (9) des Materialblocks (5) verbunden sind,
c) Beseitigen des Materials (9), das die Blätter (7, 8) verbindet, mittels einer Fräse, die eine Achse (10) umfasst, die eine Scheibe (11) trägt, deren Umfangsfläche (12) eine Schnittfläche ist, wobei die Achse (10) im Wesentlichen parallel zur vorbestimmten Richtung (A) ausgerichtet ist.

2. Verfahren nach Anspruch 1, **dadurch gekennzeichnet, dass** der Schritt b) die folgenden Schritte umfasst:
- Bearbeiten einer ersten Seite (5a) des Materialblocks (5) zum Bilden eines ersten Teils der Durchgangsöffnung (6) und des ersten Blattes (7),
- dann Bearbeiten einer zweiten Seite (5b) des Materialblocks (5), die der ersten Seite (5a) entgegengesetzt ist, um den übrigen Teil der Durchgangsöffnung (6) und des zweiten Blattes (8) zu bilden.

3. Verfahren nach Anspruch 1 oder 2, **dadurch gekennzeichnet, dass** der Schritt b) zumindest teilweise durch Fräsen ausgeführt wird.

4. Verfahren nach einem der Ansprüche 1 bis 3, **dadurch gekennzeichnet, dass** der Schritt b) zumindest teilweise mittels eines Walzenfräsers ausgeführt wird.

5. Verfahren nach einem der Ansprüche 1 bis 4, **dadurch gekennzeichnet, dass** der Schritt b) zumindest teilweise durch Elektroerosion ausgeführt wird.

6. Verfahren nach einem der Ansprüche 1 bis 5, **dadurch gekennzeichnet, dass** das Material ein metallisches Material ist.

7. Verfahren nach einem der Ansprüche 1 bis 6, **dadurch gekennzeichnet, dass** das Material Stahl, Kupfer-Beryllium, Messing, metallisches Glas oder Neusilber ist.

8. Anwendung des Verfahrens nach einem der Ansprüche 1 bis 7 auf die Herstellung eines Uhrenbauteils (1).

9. Anwendung des Verfahrens nach einem der Ansprüche 1 bis 7 auf die Herstellung eines Uhrenbauteils (1) von einem von den folgenden Typen: Oszillator, Wippe, Hebel, Anker.

## Claims

1. Method for manufacturing a mechanical component (1) with a flexible pivot with separate crossed strips (4a, 4b), **characterised in that** it comprises the following steps:
a) providing a block of material (5),
b) machining the block of material (5) to form a through opening (6) in a predetermined direction (A) and first and second strips (7, 8) extending in the through opening (6) in two different planes substantially perpendicular to the predetermined direction (A), the first and second strips (7, 8) crossing each other as seen in plan view from above and being, in their crossing zone, connected by material (9) of said block of material (5),
c) removing the material (9) connecting the strips (7, 8) by means of a milling-cutter comprising a spindle (10) bearing a disc (11) with its peripheral surface (12) being a cutting surface, said spindle (10) being orientated substantially parallel to the predetermined direction (A).

2. Method as claimed in claim 1, **characterised in that** step b) comprises the following steps:
- machining a first face (5a) of the block of material (5) to form a first part of the through opening (6) and the first strip (7),
- then machining a second face (5b) of the block of material (5), opposite to the first face (5a), to form the remaining part of the through opening (6) and the second strip (8).

3. Method as claimed in claim 1 or 2, **characterised in that** step b) is carried out, at least in part, by milling-cutting.

4. Method as claimed in any one of claims 1 to 3, **characterised in that** step b) is carried out, at least in part, by means of a cylindrical milling-cutter.

5. Method as claimed in any one of claims 1 to 4, **characterised in that** step b) is carried out, at least in part, by spark-machining.

6. Method as claimed in any one of claims 1 to 5, **characterised in that** said material is a metallic material.

7. Method as claimed in any one of claims 1 to 6, **characterised in that** said material is steel, copper-beryllium, brass, metallic glass or nickel silver.

8. Application of the method as claimed in any one of claims 1 to 7 to the manufacture of a timepiece component (1).

9. Application of the method as claimed in any one of claims 1 to 7 to the manufacture of a timepiece component (1) of one of the following types: oscillator, rocker, lever, anchor.
